# EUROPÄISCHE PATENTANMELDUNG

(11) **EP 1 255 181 A2**
(43) Veröffentlichungstag der Anmeldung: **06.11.2002**
(21) Anmeldenummer: 02008242.6
(22) Anmeldetag: 18.04.2002
(51) Int. Cl.: G06F 1/16, A47B 46/00, A45C 5/12

(54) **Verstauvorrichtung zum Verstauen von elektrischen Geräten in mobilen Einheiten**

(30) Priorität: 23.04.2001 AT 650012001
(71) Anmelder: Winfo Data GmbH, 5280 Braunau (AT)
(72) Erfinder: Forthuber, Karl, 5261 Uttendorf (AT)
(74) Vertreter: Müller, Frank Peter, Dipl.-Ing.

(57) **Zusammenfassung**

Die Erfindung betrifft eine Verstauvorrichtung zum Verstauen von elektrischen Geräten wie Drucker in mobilen Einheiten wie EDV-Koffer oder Schubladen von Rollcontainern, mit einer Tragplatte (12) zur Befestigung des elektrischen Geräts, einer Kulisse (5), die an oder in der mobilen Einheit (1) angebracht wird, und Führungsmitteln, womit die Tragplatte (12) zwischen einer Arbeitsstellung und einer im wesentlichen vertikalen Verstaustellung des elektrischen Geräts mittels der Kulisse (5) verbringbar ist, wobei erste Führungsmittel (13, 14, 17, 18, 19) eine im wesentlichen vertikale Arbeitsstellung der Tragplatte (12) und zweite Führungsmittel (16, 18, 28, 20, 19) eine im wesentlichen horizontale Arbeitsstellung der Tragplatte (12) ermöglichen. Mit Vorteil weist die Kulisse (5) einen Führungszapfen (13) und Führungsnasen (17, 23) auf, die in eine Schiene (19) der Tragplatte (12) derart eingreifen bzw. daran gleiten, dass die Tragplatte (12) sowohl in der vertikalen als auch in der horizontalen Position sicher in der Kulisse (5) liegt.

## Beschreibung

Die Erfindung betrifft eine Verstauvorrichtung zum Verstauen von elektrischen Geräten wie Drucker in mobilen Einheiten wie EDV-Koffer oder Schubladen von Rollcontainern nach dem Oberbegriff des Patentanspruches 1 sowie vorteilhafte Verwendungen einer solchen Verstauvorrichtung nach Patentanspruch 14.

Eine solche Verstauvorrichtung ist beispielsweise aus der DE 195 06 740 C1 bekannt, die einen Koffer für tragbare Computer samt Zubehör beschreibt, wobei der Koffer neben Fächern zur Aufnahme eines Druckers oder eines tragbaren Computers weitere Abteile zur Aufnahme der Stromversorgung, der Kabel und weitere Zubehörteile aufweist. In aller Regel wird der tragbare Computer dem EDV-Koffer entnommen, während der Drucker im Koffer verbleibt. Jedoch muß der Drucker aus der Verstaustellung in eine Arbeitsstellung gebracht werden, um beispielsweise für die Zufuhr bzw. Abfuhr von Papier zugänglich zu sein.

Zu diesem Zweck beschreibt die DE 195 06 740 C1 eine einteilige Tragplatte zur Befestigung des Druckers, die über eine horizontale Achse schwenkbar mit dem oberen Rand eines Trennwandteils des Koffers verbunden ist. Sobald die Tragplatte aus den Führungen der im Koffer angebrachten Kulisse freikommt, kann sie mit dem auf ihr befestigten Drucker aus dessen vertikaler Verstaulage in eine horizontale Arbeitslage umgelegt werden. In dieser Arbeitslage ist der Drucker für die Papierzufuhr und für die sonstige Bedienung leicht zugänglich.

Bei solchen Verstauvorrichtungen ist es wichtig, daß die elektrischen Geräte aus einer in der Regel tiefen Verstaulage in eine erhöhte Arbeitsstellung gebracht werden können, um diese ergonomisch bedienen zu können. So existieren aber nicht nur elektrische Geräte wie Schreibmaschinen oder beispielsweise die Drucker CANON BJ85® oder OLIVETTI JP90®, die in einer horizontalen Arbeitsstellung betrieben werden, sondern auch andere elektrische Geräte wie beispielsweise der in stehender Position betriebene Drucker HPDJ 350 oder HP340 der "Desk Jet ®-Familie der amerikanischen Herstellerfirma Hewlett Packard®.

Hingegen ist die bevorzugte Verstaustellung vertikal, da beispielsweise EDV-Koffer oder auch Schubladen von Rollcontainer meist nur nach oben hin offen sind und nur ein vertikales Ein- bzw. Ausführen von Gerätschaften erlauben.

EP 97 115 862.1 offenbart eine Verstauvorrichtung für EDV-Koffer, bei der die Tragplatte zur Befestigung des elektrischen Geräts auch gleichzeitig die Trennwand innerhalb des Koffers bildet, um eine günstige Gewichtsverteilung zu erhalten. Die Trennwand ist dabei einstückig ausgebildet, um die Befestigung von vertikal und horizontal bedienbaren Druckern zu ermöglichen. Darüber hinaus offenbart diese Anmeldung Achszapfen, die über die Trennwandränder vorstehen und derart eine Schwenkachse zusammen mit entsprechenden seitlichen Führungen der seitlichen Wände des Koffers bilden, daß die Trennwand in ihrer Gesamtheit aus einer vertikalen Verstaustellung in eine horizontale Bedienstellung schwenkbar ist. Ein gegebenenfalls in aufrechter Position bedienbarer Drucker wird dann nach dem Verschwenken in seine aufrecht stehende Position geklappt.

Während mit den vorgenannten Verstauvorrichtungen elektrische Geräte aus einer im wesentlichen vertikalen Verstaustellung in eine horizontale Arbeitsstellung gebracht werden können, weisen diese den Nachteil auf, daß insbesondere vertikal bedienbare elektrische Geräte nach dem Verschwenken der Tragplatte in eine horizontale Stellung erst umgeklappt werden müssen, bis diese bedienbar sind. Die Befestigung solcher Geräte an der schwenkbaren Tragplatte ist problematisch.

Es ist daher die Aufgabe der vorliegenden Erfindung, eine Verstauvorrichtung der vorbekannten Art dahingehend zu verbessern, daß diese zum Verstauen einer Vielzahl unterschiedlicher elektrischer Geräte in verschiedenen mobilen Einheiten geeignet ist, ohne dass besondere Anforderungen an die Befestigung des elektrischen Geräts gestellt werden müssen. Zwischen der Tragplatte und dem elektrischen Gerät soll eine wackelfreie und feste Verbindung existieren, während ein und dieselbe Verstauvorrichtung für unterschiedliche Arten von beispielsweise horizontal und vertikal betriebenen Geräten geeignet sein soll.

Die Erfindung löst die ihr zugrunde liegende Aufgabe durch die kennzeichnenden Merkmale des Patentanspruches 1. Vorteilhafte Ausführungsformen sind in den Unteransprüchen gekennzeichnet. Bevorzugte Verwendungen der erfindungsgemäßen Verstauvorrichtung sind im Patentanspruch 14 gekennzeichnet.

Gemäß der vorliegenden Erfindung weist die Verstauvorrichtung eine Tragplatte zur Befestigung der elektrischen Geräte, eine Kulisse, die an oder in der mobilen Einheit angebracht wird und Führungsmittel auf, womit die Tragplatte zwischen einer Arbeitsstellung und einer im wesentlichen vertikalen Verstaustellung des elektrischen Geräts mittels der Kulisse verbringbar ist. Dabei interagieren die Führungsmittel, die entweder an der Kulisse oder an der Tragplatte oder an beiden Teilen angebracht sein können, derart, dass erste Führungsmittel eine im wesentlichen vertikale Arbeitsstellung der Tragplatte und zweite Führungsmittel eine im wesentlichen horizontale Arbeitsstellung der Tragplatte ermöglichen. Die ersten und zweiten Führungsmittel können teilweise oder gänzlich identisch sein.

Die Tragplatte wird zur Bedienung des elektrischen Geräts in einer im wesentlichen vertikalen Stellung nicht mehr verschwenkt, wie beim Stand der Technik.

Gemäß der vorliegenden Erfindung ermöglichen seitliche Führungsmittel der Tragplatte und seitliche Führungsmittel der Kulisse, die an der mobilen Einheit mit Vorteil auf beiden Seiten der Tragplatte angebracht wird, ein vertikales und/oder horizontales Verschieben der Tragplatte in oder aus der Verstaustellung in eine im wesentlichen vertikale oder in eine im wesentlichen horizontale Arbeitsstellung.

Nach einer ersten bevorzugten Ausführungsform der Erfindung weist die Kulisse einen Führungszapfen und einen ersten Absatz auf, wobei der Führungszapfen in einen Kanal einer Schiene der Tragplatte im Abstand vom ersten Absatz derart eingreift, daß ein unterer Schienenanschlag der Schiene auf dem Absatz in der Verstaustellung zu liegen kommt. Die Tragplatte ist durch den an der Kulisse angebrachten Führungszapfen vertikal verschiebbar, während der untere Absatz der Kulisse ein Ruhen der Tragplatte in der vertikalen Verstaustellung erlaubt.

Die Kulisse weist darüber hinaus mindestens zwei nicht benachbarte Führungsnasen auf, die auf beiden Seiten des Führungszapfens derart auf der Schiene der Tragplatte aufliegen oder eingreifen bzw. dort entlang gleiten, daß die Tragplatte in einer im wesentlichen vertikalen Arbeitsstellung arretierbar ist, wenn sich der Führungszapfen in einer Haltenase der Schiene befindet bzw. dort einrastet. Die Tragplatte wird aus der ruhenden, im wesentlichen vertikalen Verstaustellung nach oben gezogen, so daß der Führungszapfen längs des Kanals der Schiene der Tragplatte gleitet. Am unteren Ende der Schiene befindet sich eine gewölbte oder gekröpfte Haltenase, in die der Führungszapfen nach leichter Auslenkung der Tragplatte hineingleitet. Sowohl unterhalb als auch oberhalb des Führungszapfens befinden sich an der Kulisse angebrachte Führungsnasen, die beispielsweise an der der Haltenase der Schiene gegenüberliegenden Oberseite der Schiene angreifen und diese gegen ein Verdrehen um den Drehpunkt des Führungszapfens sichern. Die Tragplatte ist in dieser Stellung sicher arretiert.

Zur sicheren Arretierung und zum Verbringen der Tragplatte in eine möglichst hohe Position ist die Haltenase mit Vorteil im Bereich des unteren Schienenanschlags der Schiene angebracht. Die zweite nicht benachbarte Führungsnase befindet sich dann zwischen dem unteren Schienenanschlag und der Haltenase auf der der Haltenase abgewandten Seite der Schiene.

Mit Vorteil weist die Schiene eine Öffnung im Bereich des unteren Schienenanschlags auf, um den Führungszapfen aus dem Kanal der Schiene lösen zu können und um ein Verschwenken der Tragplatte zu ermöglichen. Die Kulisse weist hierfür mindestens zwei benachbarte Führungsnasen auf, die derart auf der Schiene der Tragplatte aufliegen oder dort eingreifen, daß die Tragplatte im wesentlichen in die Horizontale verschenkbar ist. Zu diesem Zweck ist mit Vorteil eine weitere Führungsnase im Bereich der zweiten vorerwähnten nicht benachbarten Führungsnase auf der dieser Führungsnase abgewandten Seite der Schiene angebracht, um die Schiene quasi "in die Zange" zu nehmen. Mittels der auf beiden Seiten der Schiene anliegenden benachbarten Führungsnasen kann die Schiene nach dem Loslösen des Führungszapfens aus dem Kanal nicht nur längs verschoben, sondern auch quer verschwenkt werden. Dies gewährleistet eine einfache und leicht zugängliche Handhabung.

Zur Arretierung der Tragplatte in der im wesentlichen horizontalen Position eignet sich ein an der Kulisse angebrachter zweiter Absatz sowie eine obere Kulissenführung zwischen dem zweiten Absatz und den zwei benachbarten Führungsnasen, so daß die Schiene nach dem Verschwenken mit ihrem unteren Schienenanschlag an einem hinteren Kulissenanschlag ansetzt und mittels des zweiten Absatzes vor einem Zurückschwenken in die vertikale Position gesichert wird.

Die Kulisse weist am zweiten Absatz mit Vorteil eine zum Führungszapfen hinführende Führungsschiene auf, die ein Einführen des Führungszapfens in den Kanal der Schiene beim Zurückschwenken der Tragplatte aus der im wesentlichen horizontalen Arbeitsstellung in eine der anderen Stellungen erleichtert. Hierzu wird die Tragplatte in der Horizontalen ein wenig nach vorne, d.h. weg vom Kulissenanschlag gezogen, um ein Loslösen des unteren Schienenanschlags vom Kulissenanschlag zu ermöglichen und um den unteren Schienenanschlag vom zweiten Absatz abzuheben. Danach wird die Tragplatte in die Vertikale zurückgeschwenkt, wobei die Führungsschiene ein "Einfädeln" des Führungszapfens in die Öffnung des Kanals der Schiene erleichtert.

Mit Vorteil ist der Abstand zwischen den benachbarten Führungsnasen kleiner als die Breite der Schiene im Bereich des unteren Schienenanschlags bzw. der dort angeformten Haltenase des Kanals, um ein vollständiges Herausziehen der Tragplatte aus der Kulisse beim Verschwenken zu verhindern.

Nach einer zweiten bevorzugten Ausführungsform der Erfindung weist die Kulisse eine Führungsbahn auf, in die zwei voneinander beabstandete Gleitzapfen der Tragplatte eingreifen, wobei am oberen ersten Ende der Führungsbahn für den ersten oberen Gleitzapfen der Tragplatte eine Rastnase bzw. Rastrinne derart angebracht ist, daß die Tragplatte in eine im wesentlichen vertikale Arbeitsstellung verbringbar ist. Hierzu gleiten beide Gleitzapfen der Tragplatte im Kanal der Führungsbahn, bis der obere Gleitzapfen in die obere Rastnase bzw. -rinne eingreift bzw. dort zu liegen kommt.

Darüber hinaus weist die Kulisse nach der zweiten bevorzugten Ausführungsform der vorliegenden Erfindung eine Kurvenbahn auf, die an einer Abzweigung von der Führungsbahn abzweigt, so dass der zweite untere Gleitzapfen derart in der Kurvenbahn gleitet, dass die Tragplatte in eine im wesentlichen horizontale Arbeitsstellung verbringbar ist. Damit der untere zweite Gleitzapfen in die Kurvenbahn hineingleiten kann, wird die Tragplatte leicht angehoben, um den oberen ersten Gleitzapfen aus der Rastrinne zu heben. Während des Verschwenkvorgangs schwingt der erste obere Gleitzapfen wieder in die Rastrinne zurück.

Zu diesem Zweck ist der Abstand zwischen den beiden Gleitzapfen etwas größer als der Abstand zwischen der Rastrinne bzw. -nase und der Abzweigung, so dass die Tragplatte in der im wesentlichen vertikalen Arbeitsstellung arretierbar ist und der Drehpunkt beim Verschwenken der Tragplatte zwischen den beiden Gleitzapfen liegt.

Eine gedachte Gerade durch den der Abzweigung gegenüberliegenden Endpunkt der Kurvenbahn und der Rastnase liegt im wesentlichen horizontal.

Bevorzugte Verwendungen der beiden vorerwähnten Ausführungsformen der Erfindung dienen zur Befestigung oder zum Verstauen eines Druckers für einen EDV-System-Koffer, für die Befestigung oder zum Verstauen eines Druckers für die Schublade eines Rollcontainers oder auch für die Befestigung oder zum Verstauen einer Schreibmaschine für eine Schreibtischschublade. Darüber hinaus sind weitere Ausgestaltungen der Verstauvorrichtung beispielsweise für Computer, Scanner, Diktiergeräte, Telefone oder Messgeräte denkbar, die in einer im wesentlichen vertikalen Verstaustellung transportiert oder verstaut und in einer erhöhten vertikalen oder horizontalen Arbeitsstellung bedient werden müssen (bsp. für Montagezwecke oder Messzwecke am Flugzeug in Flugzeughangars).

Zwei bevorzugte Ausführungsformen der vorliegenden Erfindung werden anhand der nachfolgenden Figuren näher erläutert. Dabei zeigen:
- Figur 1: eine Schnittdarstellung durch eine erste Ausführungsform der erfindungsgemäßen Verstauvorrichtung in einem EDV-System-Koffer,
- Figur 2: eine Schnittdarstellung durch die Verstauvorrichtung nach Figur 1 in einer ersten im wesentlichen vertikalen Arbeitsstellung,
- Figur 3: eine Schnittdarstellung durch die Verstauvorrichtung nach Figur 1 in einer ersten im wesentlichen horizontalen Arbeitsstellung,
- Figur 4: eine Aufsicht sowie entsprechende Seitenansichten der Tragplatte,
- Figur 5: eine Schnittdarstellung durch eine Verstauvorrichtung nach einer zweiten bevorzugten Ausführungsform der vorliegenden Erfindung in einer ersten, im wesentlichen vertikalen Arbeitsstellung, und
- Figur 6: eine Schnittdarstellung durch eine Verstauvorrichtung nach einer zweiten bevorzugten Ausführungsform der vorliegenden Erfindung in einer zweiten, im wesentlichen horizontalen Arbeitsstellung.

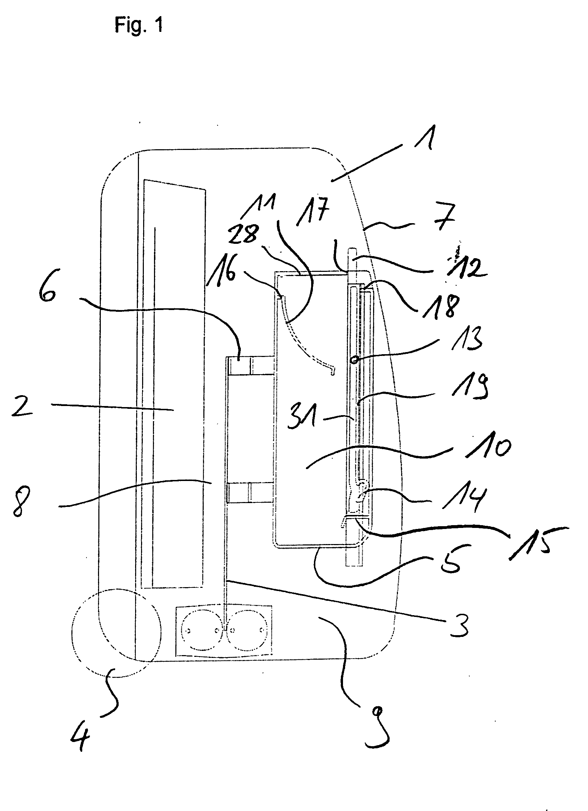

Figur 1 zeigt die Schnittdarstellung durch eine erste bevorzugte Ausführungsform der erfindungsgemäßen Verstauvorrichtung, die in einer mobilen Einheit 7 wie in einem EDV-System-Koffer angebracht ist. Der Koffer (z. B. Samsonite® Transit® - Serie) weist einen Stauraum 1 auf, der durch eine Trennwand 3 verstärkt, versteift und/oder abgetrennt werden kann. In einem ersten Raum 8 befindet sich beispielsweise eine PC-Tasche 2 zur Aufbewahrung eines Notebooks. In einem zweiten Raum 9 befindet sich die erfindungsgemäße Verstauvorrichtung, die eine Kulisse 5 umfasst, die beispielsweise mittels Befestigungsmitteln 6 an der Trennwand oder auch mittels Blindnieten an den Seitenwänden des Koffers oder durch Klebung oder sonstige Befestigung dort angebracht sein kann. Räder 4 dienen zum leichten Transport des EDV-System-Koffers.

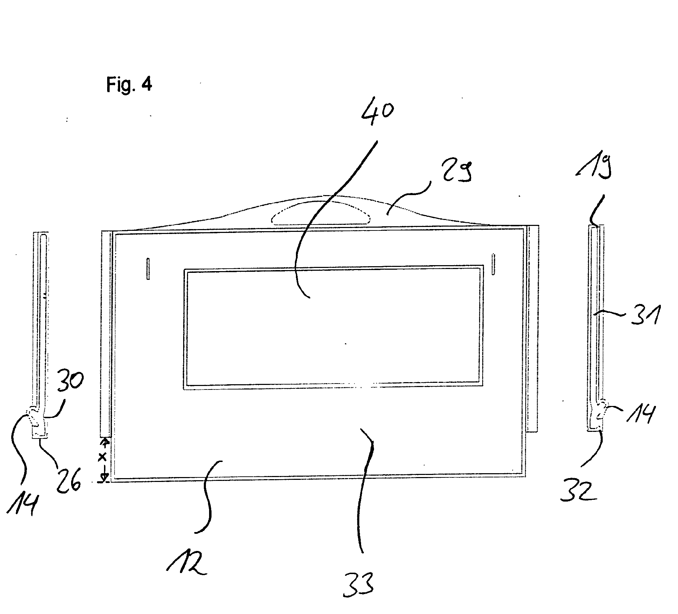

Die Kulisse 5 weist einen ersten Absatz 15 sowie einen Führungszapfen 13 auf, die maßgeblich zur im wesentlichen vertikalen Verstaustellung des elektrischen Geräts dienen. Der Führungszapfen 13 greift in den Kanal 31 einer Schiene 19 ein, die an der Tragplatte 12 befestigt ist oder einen Teil der Tragplatte 12 bildet. Die Schiene 19 steht seitlich an der Tragplatte 12 vor (Fig. 4), so dass die Tragplatte zwischen den auf beiden Seitenwänden des Koffers oder der Tasche angebrachten Kulissen 5 frei beweglich ist. In der ersten vertikalen Verstaustellung liegt die Schiene 19 auf dem ersten Absatz 15 auf.

Beim Hochziehen der Schiene 19 ist eine Haltenase 14 mit Vorteil derart gekröpft, gekrümmt oder abstehend, dass diese an der seitlichen Kulissenfläche entlang gleitet, so dass die Schiene 19 zwischen zwei oberen benachbarten Führungsnasen 17 und 18 entlang gleitet. Darüber hinaus ist der Gleitweg der Schiene 19 und somit auch der Tragplatte 12 mit Vorteil durch die zwei oberen benachbarten Führungsnasen 17 und 18 sowie den Führungszapfen 13 definiert, der im Kanal 31 der Schiene 19 gleitet. Die zwei benachbarten oberen Führungsnasen 17 und 18 werden mit Vorteil durch das Ende eines horizontalen oberen Stegs der Kulisse 5, der auch eine obere Kulissenführung 28 bildet, sowie durch ein gekröpftes Ende des vertikalen seitlichen Stegs der Kulisse 5 gebildet. Hingegen sind auch andere Ausführungsformen wie beispielsweise Zapfen, Wülste oder Nadeln denkbar.

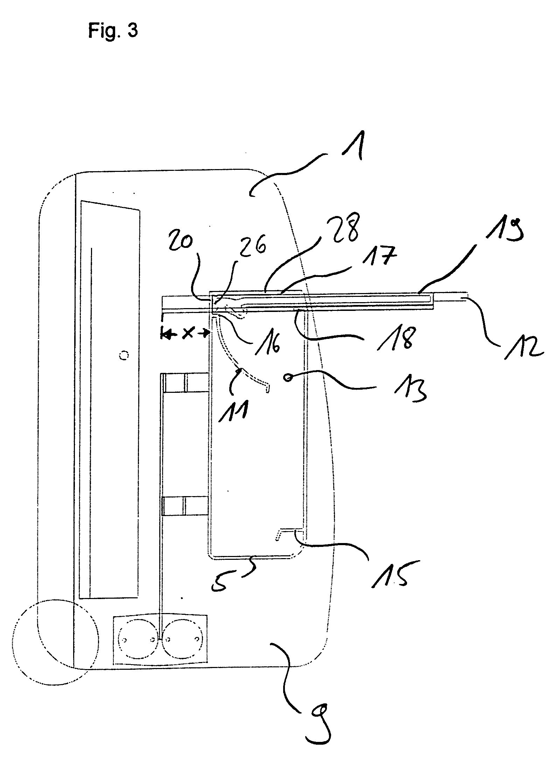

Eine Führungsschiene 11 und ein zweiter Absatz 16 dienen zum Verschwenken der Tragplatte 12. Dies wird näher in Figur 3 erläutert.

Statt dem ersten Absatz 15 kann auch ein weiterer Zapfen (nicht gezeigt) an der Kulisse 5 vorgesehen sein, der in der Verstaustellung in die Haltenase 14 eingreift.

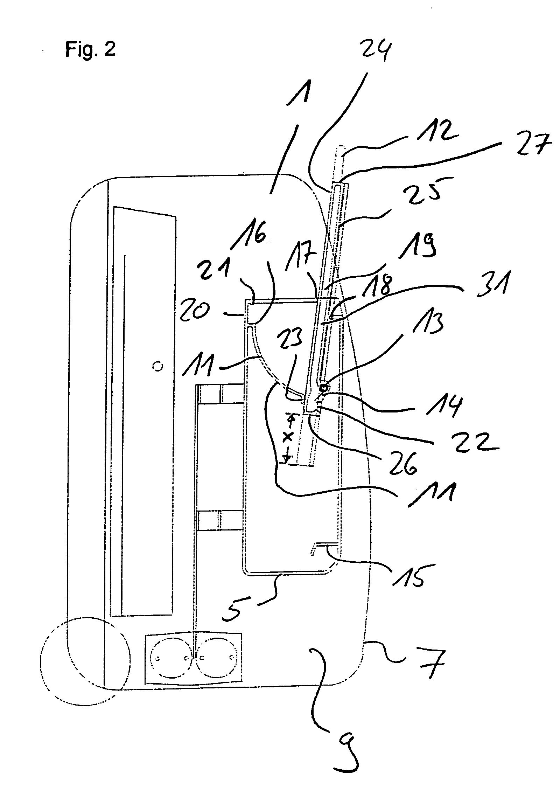

Figur 2 zeigt eine Schnittdarstellung durch die erste bevorzugte Ausführungsform der vorliegenden Erfindung nach Figur 1, wobei die Tragplatte 12 in einer im wesentlichen vertikalen Arbeitsstellung gezeigt ist. Beim Hochziehen der Tragplatte 12 gleitet der Führungszapfen 13 der Kulisse 5 entlang des Kanals 31 der Schiene 19, bis dieser in eine halbrunde, gekröpfte, geschwungene oder ausgebuchtete Haltenase 14 eingreift. In dieser Stellung ist die Tragplatte 12 mittels des Führungszapfens 13, mittels der ersten oberen Führungsnase 17 und mittels einer dritten Führungsnase 23 arretiert. Die dritte Führungsnase 23 wird mit Vorteil durch das Ende der Führungsschiene 11 gebildet.

Die Schiene 19 kann zusätzlich auf der der Haltenase 14 zugewandten Seite durch die zweite benachbarte Führungsnase 18 unterstützt werden, dies ist jedoch nicht notwendig. Denkbar ist auch eine Arretierung der Tragplatte 12 durch die zwei benachbarten Führungsnasen 17 und 18 und durch Weglassen der dritten Führungsnase 23.

Zum Verbringen der Tragplatte 12 in die im wesentlichen horizontale Arbeitsstellung wird diese leicht angehoben, so dass der Führungszapfen 13 aus der Haltenase 14 gleitet und aus der Öffnung 22 des Kanals 31 austritt. Zu diesem Zweck wird die Tragplatte 12 leicht bsp. im Uhrzeigersinn verschwenkt, während der untere Schienenanschlag 26 gegebenenfalls entlang der Führungsschiene 11 in Richtung des zweiten Absatzes 16 gleitet. Die Tragplatte 12 kann dabei durchaus und mit Vorteil um einen gewissen Abstand x über den unteren Schienenanschlag 26 vorstehen, um in der horizontalen Position eine bessere Gewichtsverlagerung innerhalb der mobilen Einheit 7 zu erreichen.

Während des Verschwenkens bsp. im Uhrzeigersinn greift und gleitet die erste Führungsnase 17 auf der oberen insbesondere der Haltenase 14 abgewandten Schienenfläche 24 der Schiene 19, während die zweite Führungsnase 18 entlang der unteren Schienenfläche 25 gleitet bzw. dort angreift, die auf der Seite der Haltenase 14 bzw. der Öffnung 22 des Kanals 31 liegt. Das obere Schienenende 27 sollte, in der im wesentlichen vertikalen Ruhestellung der Tragplatte 12 nach Figur 1, zum Führungszapfen 13 einen größeren Abstand aufweisen als die zweite Führungsnase 18, um ein zuverlässiges Herausziehen der Tragplatte 12 aus der mobilen Einheit 7 zu gewährleisten.

Figur 3 zeigt die schematische Schnittdarstellung durch die erste Ausführungsform der erfindungsgemäßen Verstauvorrichtung, wobei die Tragplatte 12 in einer im wesentlichen horizontalen Arbeitsstellung gezeigt wird. Nach dem Verschwenken legt sich der untere Schienenanschlag 26 an einen Kulissenanschlag 20 an und die Tragplatte 12 ist durch einen zweiten Absatz 16 der Kulisse 5, der horizontal vom unteren Ende des vertikalen Kulissenanschlags 20 absteht, gesichert. Oberhalb des vertikalen Kulissenanschlags 20 befindet sich mit Vorteil ebenfalls eine horizontale obere Kulissenführung 28, die entweder an dem dem Kulissenanschlag 20 abgewandten Ende die erste Führungsnase 17 bildet, oder die bereits, wie der zweite Absatz 16, lediglich sehr kurz ausgebildet ist. In diesem Fall wird die erste Führungsnase 17 beispielsweise mittels eines Rundzapfens oder einer Nadel der Kulisse 5 gebildet.

Den zweiten Auflagepunkt bildet die zweite Führungsnase 18, die am vorderen Ende der Kulisse 5, die im unteren Bereich den im wesentlichen horizontalen ersten Absatz 15 aufweist, ebenfalls horizontal angebracht ist. Auch hier kann statt der horizontal abstehenden zweiten Führungsnase 18 eine Nadel oder ein Rundzapfen verwendet werden. In diesem Fall kann die Kulisse 5 bereits am unteren ersten Absatz 15 enden.

Figur 4 zeigt die Aufsicht und die zwei seitlichen Ansichten der Tragplatte 12. Diese hat eine Befestigungsfläche 33, wo elektrische Geräte befestigt werden können, sowie eine Griffleiste 29 zum Bedienen der Tragplatte. Darüber hinaus ist auf beiden Seiten der Tragplatte 12 die Schiene 19 mit Kanal 31, Haltenase 14 und einem Horn 32 angebracht. Das Horn 32 verhindert das unbeabsichtigte Loslösen des Führungszapfens 13 aus dem Kanal 31. Figur 4 zeigt desweiteren die Anbringung der Schiene 19 an der Tragplatte 12. Mit Vorteil wird die Schiene 19 in einem Abstand x vom unteren Ende der Tragplatte 12 angebracht, um das Gewicht des elektrischen Geräts beim Verschwenken der Tragplatte 12 in die im wesentlichen horizontale Arbeitsstellung möglichst weit in den Innenraum der mobilen Einheit zu verlegen. Dadurch wird ein Nachvornekippen der mobilen Einheit 7 verhindert. Eine Druckeröffnung 40 dient zum Zuführen von zu bedruckendem oder bedrucktem Papier bzw. zum Auswechseln der Druckpatronen.

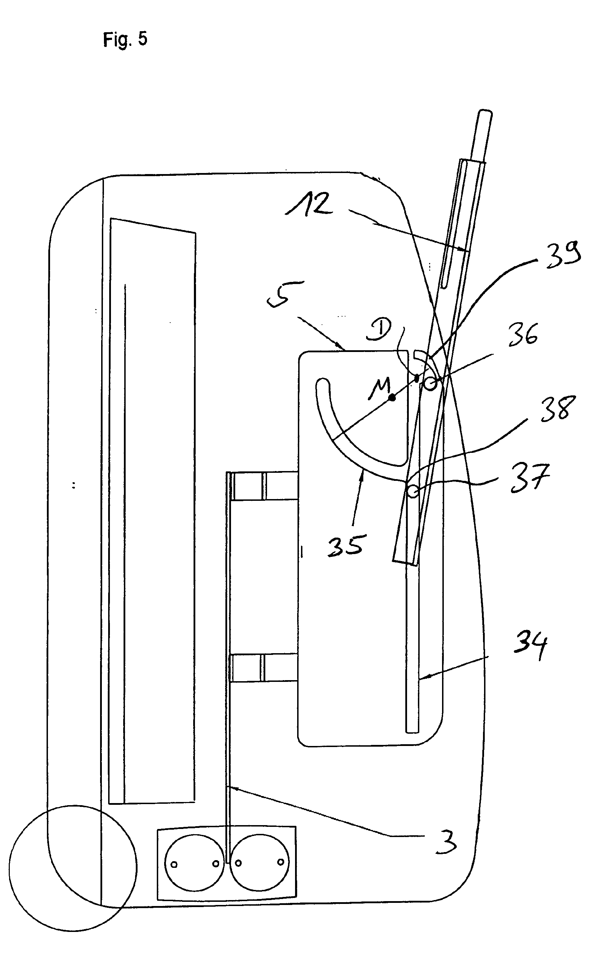

Figur 5 zeigt die schematische Schnittdarstellung durch eine zweite bevorzugte Ausführungsform der vorliegenden Erfindung, wobei hier in der Kulisse 5 eine Führungsbahn 34 und eine Kurvenbahn 35 eingearbeitet sind, in denen erste und zweite Gleitzapfen 36 und 37 gleiten, die seitlich an der Tragplatte 12 abstehen. Die Kurvenbahn 35 zweigt an einer Abzweigung 38 von der Führungsbahn ab, wobei die Abzweigung 38 an einer Position angebracht ist, die oberhalb der "Arbeitsstellung" des zweiten unteren Gleitzapfens 37 liegt, wenn der erste obere Gleitzapfen 36 in eine Rastnase 39 der Führungsbahn 34 einrastet bzw. eingreift.

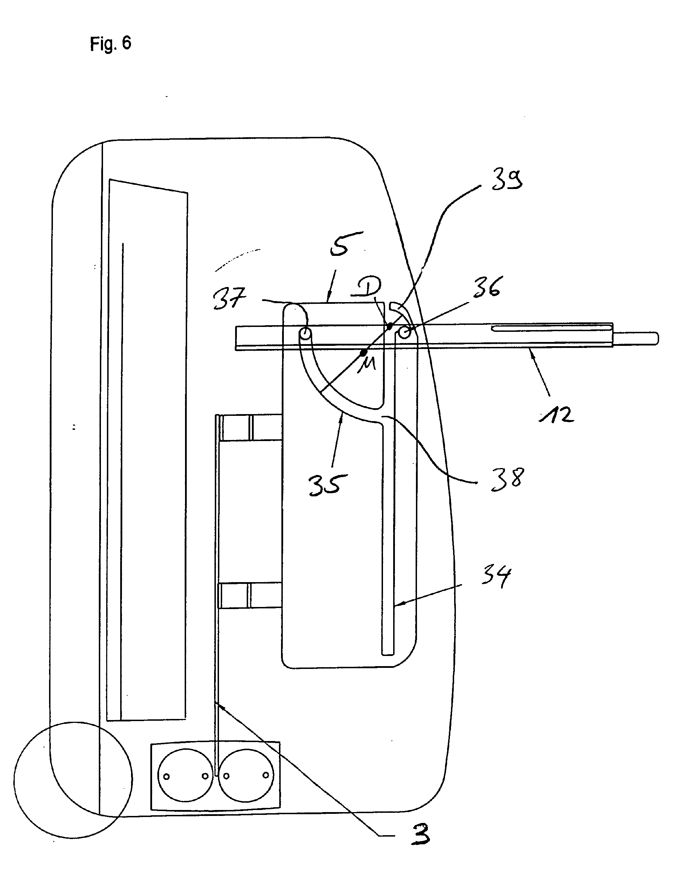

Figur 6 zeigt eine schematische Schnittdarstellung durch die zweite bevorzugte Ausführungsform der vorliegenden Erfindung, wobei der zweite untere Gleitzapfen 37 in der viertelkreisförmigen Kurvenbahn 35 gleitet, bis die Tragplatte 12 in einer im wesentlichen horizontalen Stellung liegt. Hierzu bildet eine gedachte Gerade durch den der Abzweigung 38 gegenüberliegenden Endpunkt der Kurvenbahn 35 und der Rastnase 39 eine Horizontale.

Zum Verschwenken wird die Tragplatte 12, wie in Figur 5 gezeigt, leicht angehoben, so dass der obere erste Gleitzapfen 36 aus der Rastnase bzw. -rinne 39 herausgleitet, um ein "Einfädeln" des unteren zweiten Gleitzapfens 37 in die Kurvenbahn 35 zu ermöglichen. Zu diesem Zweck ist die Rastnase 39 komplementär zur Kurvenbahn 35 geformt, so dass die Gleitflächen der Rastnase 39 und der Kurvenbahn 35 einen Kreismittelpunkt M oder Drehpunkt D bilden, um den die Tragplatte 12 verschwenkt wird. Figuren 5 und 6 zeigen beide Ausführungsformen, wobei der Drehpunkt D in aller Regel (sofern die Längen der Kurvenbahn 35 und Rastnase 39 unterschiedlich groß sind) keinen Kreismittelpunkt M bildet, sondern auf der Strecke zwischen den Gleitflächen der Kurvenbahn 35 und der Rastnase 39 liegt.

Mittels der vorerwähnten zwei bevorzugten Ausführungsformen der Verstauvorrichtung nach der Erfindung lässt sich sowohl ein vertikal betriebener als auch ein horizontal betriebener Drucker problemlos in einem EDV-System-Koffer verstauen. Weitere vorteilhafte Verwendungen der erfindungsgemäßen Vorrichtung dienen zur Befestigung eines Druckers für die Schublade in einem Rollcontainer oder für andere vorerwähnte Anwendungszwecke.

## Patentansprüche

1. Verstauvorrichtung zum Verstauen von elektrischen Geräten wie Drucker in mobilen Einheiten (7) wie EDV-Koffer oder Schubladen von Rollcontainern, mit
einer Tragplatte (12) zur Befestigung des elektrischen Geräts, einer Kulisse (5), die an oder in der mobilen Einheit (7) angebracht wird, und Führungsmitteln, womit die Tragplatte (12) zwischen einer Arbeitsstellung und einer im wesentlichen vertikalen Verstaustellung des elektrischen Geräts mittels der Kulisse (5) verbringbar ist,
**dadurch gekennzeichnet,**
**dass** erste Führungsmittel (13, 14, 17, 18, 19) eine im wesentlichen vertikale Arbeitsstellung der Tragplatte (12) und
**dass** zweite Führungsmittel (16, 18, 28, 20, 19) eine im wesentlichen horizontale Arbeitsstellung der Tragplatte (12) ermöglichen.

2. Vorrichtung nach Anspruch 1,
**dadurch gekennzeichnet,**
**dass** seitliche Führungsmittel der Tragplatte (12) und seitliche Führungsmittel der Kulisse (5) ein vertikales und/oder horizontales Verschieben der Tragplatte (12) in oder aus der Verstaustellung in eine im wesentlichen vertikale oder eine im wesentlichen horizontale Arbeitsstellung ermöglichen.

3. Vorrichtung nach Anspruch 1 oder 2,
**dadurch gekennzeichnet,**
**dass** die Kulisse (5) einen Führungszapfen (13) und einen ersten Absatz (15) aufweist, wobei der Führungszapfen (13) in einen Kanal (31) einer Schiene (19) der Tragplatte (12) im Abstand vom ersten Absatz (15) derart eingreift, dass ein unterer Schienenanschlag (26) der Schiene (19) auf dem Absatz (15) in der Verstaustellung zu liegen kommt.

4. Vorrichtung nach einem der vorhergehenden Ansprüche,
**dadurch gekennzeichnet,**
**dass** die Kulisse (5) mindestens zwei nicht benachbarte Führungsnasen (17, 23) aufweist, die auf beiden Seiten des Führungszapfens (13) derart auf der Schiene (19) der Tragplatte (12) aufliegen oder eingreifen, dass die Tragplatte in einer im wesentlichen vertikalen Arbeitsstellung arretierbar ist, wenn sich der Führungszapfen (13) in einer Haltenase (14) der Schiene (19) befindet.

5. Vorrichtung nach Anspruch 3 oder 4,
**dadurch gekennzeichnet,**
**dass** sich die Haltenase (14) im Bereich des unteren Schienenanschlags (26) der Schiene (19) befindet.

6. Vorrichtung nach einem der vorhergehenden Ansprüche,
**dadurch gekennzeichnet,**
**dass** die Schiene (19) eine Öffnung (22) aufweist, um den Führungszapfen (13) aus dem Kanal (31) zu lösen, und
**dass** die Kulisse (5) mindestens zwei benachbarte Führungsnasen (17, 18) aufweist, die derart auf der Schiene (19) der Tragplatte (12) aufliegen oder eingreifen, dass die Tragplatte (12) im wesentlichen in die Horizontale verschwenkbar ist.

7. Vorrichtung nach Anspruch 6,
**dadurch gekennzeichnet,**
**dass** die Tragplatte (12) nach dem Verschwenken in der Horizontalen mittels einem an der Kulisse (5) angebrachten zweiten Absatz (16), einer oberen Kulissenführung (28) und/oder mindestens einer der benachbarten Führungsnasen (17, 18) arretierbar ist.

8. Vorrichtung nach einem der vorhergehenden Ansprüche,
**dadurch gekennzeichnet,**
**dass** die Kulisse (5) eine zum Führungszapfen (13) hinführende Führungsschiene (11) aufweist, die ein Einführen des Führungszapfens (13) in den Kanal (31) der Schiene (19) beim Zurückschwenken der Tragplatte (12) aus der im wesentlichen horizontalen Arbeitsstellung in eine der anderen Stellungen erleichtert.

9. Vorrichtung nach einem der vorhergehenden Ansprüche,
**dadurch gekennzeichnet,**
**dass** der Abstand zwischen den benachbarten Führungsnasen (17, 23) kleiner ist als Breite der Schiene (19) im Bereich des unteren Schienenanschlags (26) bzw. der Haltenase (14), um ein vollständiges Herausziehen der Tragplatte (12) aus der Kulisse (5) zu verhindern.

10. Vorrichtung nach Anspruch 1 oder 2,
**dadurch gekennzeichnet,**
**dass** die Kulisse (5) eine Führungsbahn (34) aufweist, in die zwei voneinander beabstandete Gleitzapfen (36, 37) der Tragplatte (12) eingreifen, wobei am oberen ersten Ende der Führungsbahn (34) für den ersten oberen Gleitzapfen (36) eine Rastnase (39) derart angebracht ist, dass die Tragplatte (12) in eine im wesentlichen vertikale Arbeitsstellung verbringbar ist.

11. Vorrichtung nach Anspruch 10,
**dadurch gekennzeichnet,**
**dass** die Kulisse (5) eine Kurvenbahn (35) aufweist, die an einer Abzweigung (38) von der Führungsbahn (34) abzweigt, und
**dass** der zweite untere Gleitzapfen (37) derart in der Kurvenbahn (35) gleitet, dass die Tragplatte (12) in eine im wesentlichen horizontale Arbeitsstellung verbringbar ist.

12. Vorrichtung nach einem der Ansprüch 10 oder 11,
**dadurch gekennzeichnet,**
**dass** der Abstand zwischen den beiden Gleitzapfen (36, 37) grösser ist als der Abstand zwischen der Rastnase (39) und der Abzweigung (38), so dass die Tragplatte in der im wesentlichen vertikalen Arbeitsstellung arretierbar ist und der Drehpunkt beim Verschwenken der Tragplatte (12) zwischen den beiden Gleitzapfen (36, 37) liegt.

13. Vorrichtung nach einem der Ansprüch 10 bis 12,
**dadurch gekennzeichnet,**
**dass** eine gedachte Gerade durch den der Abzweigung (38) gegenüberliegenden Endpunkt der Kurvenbahn (35) und der Rastnase (39) im wesentlichen horizontal liegt.

14. Verwendung einer Vorrichtung nach einem der vorhergehenden Ansprüche für die Befestigung eines Druckers für einen EDV-System-Koffer oder für die Befestigung eines Druckers für die Schublade eines Rollcontainers oder für die Befestigung einer Schreibmaschine für eine Schreibtischschublade.
